# FASCICULE DE BREVET EUROPEEN

(11) **EP 0 697 077 B1**
(45) Date de publication et mention de la délivrance du brevet: **30.07.1997**
(21) Numéro de dépôt: 95911375.4
(22) Date de dépôt: 03.03.1995
(51) Int. Cl.: F16H 45/02

(54) **APPAREIL D'ACCOUPLEMENT HYDROCINETIQUE, NOTAMMENT POUR VEHICULES AUTOMOBILES**
HYDRODYNAMISCHER MOMENTWANDLER, INSBESONDERE FÜR KRAFTFAHRZEUGE
HYDROKINETIC COUPLING APPARATUS, ESPECIALLY FOR MOTOR VEHICLES

(30) Priorité: 04.03.1994 FR 9402543
(43) Date de publication de la demande: 21.02.1996
(73) Titulaire: VALEO, 75017 Paris (FR)
(72) Inventeur: ANNIC, Pascal, F-35800 Dinard (FR); GINALDI, Michel, F-75015 Paris (FR); CHASSEGUET, Gustave, F-95150 Taverny (FR)
(74) Mandataire: Gamonal, Didier
(86) Numéro de dépôt international: FR9500257
(87) Numéro de publication internationale: WO9523930

(56) Documents cités:
- EP-A- 0 577 389
- DE-A- 4 118 686
- FR-A- 2 620 187

## Description

La présente invention concerne les appareils d'accouplement hydrocinétique, notamment pour véhicules automobiles, du genre comportant un carter propre à être calé en rotation sur un arbre menant, une roue de turbine propre à être calée en rotation sur un arbre mené et un embrayage de verrouillage intervenant entre le carter et la roue de turbine, ledit embrayage comportant un piston et un contre-piston associé au carter.

Un tel appareil est décrit dans le document US-A-4,976,656. Dans ce document le piston appartient à un dispositif amortisseur de torsion en formant l'une des rondelles de guidage de celui-ci.

Ce dispositif comporte en outre un voile cannelé intérieurement pour sa liaison en rotation avec mobilité axiale par rapport à un moyeu de turbine solidaire de la roue de turbine.

Ainsi le piston est lié en rotation avec mobilité axiale par rapport à la roue de turbine.

Plus précisément, ce moyeu de turbine est propre à être calé en rotation sur l'arbre d'entrée de la boîte de vitesses.

Ainsi le carter forme l'élément menant de l'appareil d'accouplement hydrocinétique et le moyeu de turbine l'élément mené dudit appareil.

Lorsque l'embrayage de verrouillage est désengagé, le piston n'est pas en contact avec le contre-piston formé ici par le carter. Dans cette position la roue de turbine est entraînée par la roue d'impulseur grâce à la circulation du fluide contenu dans le carter.

Ainsi dans cette position, l'inertie de l'embrayage de verrouillage fait sentir ses effets, car ledit embrayage est porté en majeure partie par le moyeu de turbine.

Il en résulte que cette inertie fait sentir ses effets sur l'arbre d'entrée de la boîte de vitesses et donc sur les pignons de celle-ci.

En outre l'appareil d'accouplement hydrocinétique est monté dans la chaîne cinématique allant du moteur à combustion interne du véhicule automobile à la boîte de vitesses.

Ce système présente donc une fréquence de résonance qui fait sentir ses effets au régime de marche normale du véhicule dans la plage de régime d'utilisation du moteur thermique.

Dans le document EP-A-0 577 389 montrant les caractéristiques du préambule de la revendication 1 le piston est interposé axialement entre la roue de turbine et une masse, formant le contre-piston, montée tourillonnante sur le carter, et en ce que ladite masse est accouplée élastiquement audit carter.

Grâce à cette disposition, lorsque l'embrayage est désengagé l'inertie due à l'embrayage de verrouillage est déterminée principalement par le piston et est donc très faible en sorte que les pignons de la boîte de vitesses sont ménagés.

En outre les temps de réponse pour engager et désengager l'embrayage sont réduits.

Lorsque l'embrayage de verrouillage est engagé, la masse fait sentir ses effets et l'inertie augmente en sorte que la fréquence de résonance du système dans lequel est monté l'appareil d'accouplement hydrocinétique est abaissée.

Dans ce document EP-A-0 577 389 la masse comporte un élément principal et un couvercle creusé pour montage de ressorts formant des moyens élastiques à action circonférentielle appartenant à un dispositif amortisseur de torsion. Le carter constitue l'élément d'entrée du dispositif amortisseur de torsion, tandis que la masse constitue élément de sortie dudit dispositif.

Pour ce faire un flasque solidaire en rotation du carter pénètre entre l'élément principal et le couvercle reliés par rivetage. Ce flasque est doté de logements pour les moyens élastiques.

Il en résulte que la masse et le dispositif amortisseur de torsion ont une forme relativement compliquée et que la masse est allégée par la présence du dispositif amortisseur de torsion.

En outre, l'élément principal est monté à sa périphérie interne de manière tourillonnante sur un nez tubulaire porté à fixation centralement par le carter. Cet élément est également monté de manière tourillonnante sur une projection annulaire du carter.

Cette disposition complique également la forme de la masse est de nature à perturber la rotation de la masse.

La présente invention a pour objet de pallier de manière simple et économiques ces inconvénients, tout en conservant les avantages d'un grand débattement angulaire relatif entre la masse et le carter.

La présente invention a donc pour objet de simplifier la masse, tout en augmentant son poids et en favorisant sa rotation sans perdre l'avantage d'un grand débattement angulaire relatif entre la masse et le carter.

Suivant l'invention un appareil d'accouplement du type susindiqué est caractérisé en ce que un palier est interposé radialement entre la périphérie interne de la masse et la périphérie externe du nez, en ce que la masse présente une partie principale et à la périphérie externe de sa partie principale une saillie annulaire d'orientation transversale dirigée radialement en direction du rebord annulaire du carter en étant décalée axialement par rapport à la partie principale de la masse en direction de la périphérie externe de la roue de turbine, en ce que ladite saillie offre une surface de contact au piston et en ce que les moyens élastiques à action circonférentielle du dispositif amortisseur de torsion sont montés à la périphérie externe de la partie principale de la masse entre la saillie transversale de ladite masse et la partie transversale du carter.

Grâce à l'invention la partie principale de la masse est monobloc et les moyens élastiques sont implantés sur une circonférence de grand diamètre ce qui permet d'obtenir un grand débattement angulaire relatif entre la masse et le carter, ledit débattement étant favorisé par la présence du palier.

En outre l'augmentation de l'inertie est favorable à l'abaissement de la fréquence de résonance.

Ainsi au régime de marche normale du véhicule, les phénomènes de résonance n'existent pas dans le régime d'utilisation du moteur thermique.

Suivant une caractéristique la saillie porte des doigts, dirigés axialement vers le carter, et le carter porte des pattes d'appui dirigées axialement vers la saillie.

Les doigts et les pattes servent respectivement à l'actionnement et à l'appui des ressorts des moyens élastiques.

Grâce à cette disposition on simplifie le dispositif amortisseur de torsion.

Suivant une caractéristique les doigts pénètrent chacun dans une échancrure que présente les pattes d'appui.

Ainsi les ressorts des moyens élastiques s'appuient directement ou indirectement par l'intermédiaire de coupelles sur les pattes, sauf au niveau des échancrures de celles-ci en sorte que les ressorts ont une bonne assise et sont en prise centralement avec les doigts. On obtient ainsi une attaque symétrique des ressorts, par exemple des ressorts courbes précintrés de grande longueur pour obtenir un grand débattement angulaire relatif entre le carter et la masse.

Tout ceci simplifie le dispositif amortisseur de torsion. En variante on obtient un grand débattement angulaire relatif entre le carter et la masse à l'aide de rondelles de phasage.

Avantageusement la saillie de la masse est reliée à la partie principale de la masse par une partie inclinée.

Grâce à cette disposition on occupe au mieux l'espace libre existant entre la roue de turbine et le carter et l'on peut en profiter pour caler axialement une rondelle de phasage.

La description qui va suivre illustre l'invention en regard des dessins annexés dans lesquels :
- la figure 1 est une vue en coupe axiale de l'appareil d'accouplement hydrocinétique sans l'embrayage de verrouillage dans la partie haute de cette figure et avec uniquement le piston de l'embrayage de verrouillage dans la partie basse de cette figure ;
- la figure 2 est une vue en coupe axiale selon la ligne 2-2 de la figure 3 de l'appareil hydrocinétique avec son embrayage de verrouillage ;
- la figure 3 est une vue en coupe selon la ligne 3-3 de la figure 2 ;
- la figure 4 est une vue à échelle agrandie de la partie basse de la figure 2 ;
- la figure 5 est une vue analogue à la figure 4 pour une variante de réalisation ;
- la figure 6 est une vue partielle à plus grande échelle d'une partie de la figure 3 ;
- la figure 7 est une demi-vue en coupe axiale analogue à la figure 2 pour un autre exemple de réalisation.

Tel qu'illustré par les figures, l'embrayage de verrouillage 10, mettant en oeuvre un dispositif amortisseur de torsion 4 à moyens élastiques à action circonférentielle 7, est destiné à l'équipement d'un appareil d'accouplement hydrocinétique 11, comportant un convertisseur de couple ou un coupleur, qui est lui-même destiné à l'équipement d'un véhicule automobile.

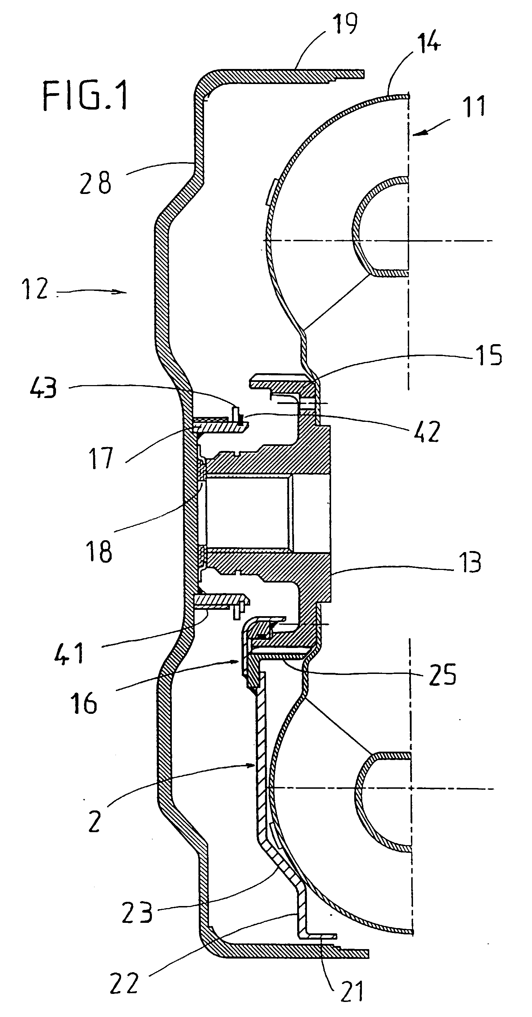

Un tel appareil est décrit dans le brevet US-A-4,976,656, auquel on pourra se reporter, et c'est la raison pour laquelle, par simplicité, seule la première partie du carter 12 et la roue de turbine 14 ont été représentées à la figure 1, la roue d'impulseur et la roue de réacteur n'étant pas visibles.

Pour mémoire on rappellera que cet appareil 11 comporte, dans un carter 12 étanche propre à être lié en rotation au vilebrequin du moteur à combustion interne, au moins une roue d'impulseur solidaire de l'autre partie du carter, en forme de demi-coquille, et une roue de turbine 14, qui est propre à être liée en rotation à l'arbre d'entrée de la boîte de vitesses. Ici l'appareil 11 comporte pour formation d'un convertisseur de couple également une roue de réacteur portée par un manchon fixe entourant ledit arbre d'entrée avec interposition d'une roue libre.

L'embrayage de verrouillage 10 intervient axialement entre la roue de turbine 14 et le carter 12, de forme annulaire, à la périphérie externe de celui-ci.

Il comporte un piston 2 propre à venir en contact avec un contre-piston 3 pour établir une liaison directe entre la roue de turbine 14 et le carter 12.

De manière connue en soi, la roue de turbine et la roue d'impulseur comportent des aubes en sorte que la roue de turbine 14 est entraînée en rotation par la roue d'impulseur solidaire du carter 12 grâce à la circulation de l'huile contenue dans le carter 12.

L'embrayage de verrouillage 10 intervient de manière connue en soi après le démarrage du véhicule automobile pour éviter les phénomènes de glissement et les pertes d'énergie.

La roue de turbine 14 est solidaire, ici par soudage en variante par rivetage, d'un moyeu de turbine 13 cannelé intérieurement pour liaison en rotation avec l'arbre d'entrée précité de la boîte de vitesses.

Ce moyeu 13, ici métallique, présente à sa périphérie externe une couronne 15 d'orientation axiale cannelée extérieurement.

Le piston 2 est solidaire ici par soudage en variante par rivetage d'une douille 25 cannelée intérieurement pour venir en prise de manière complémentaire avec les cannelures de la couronne 15.

Ainsi le carter 12 forme l'élément menant et le moyeu 13 l'élément mené de l'appareil d'accouplement hydrocinétique 11.

Le carter 12 est donc propre à être calé en rotation sur un arbre menant (l'arbre moteur du véhicule), tandis que la roue de turbine 14 est propre à être calée en rotation sur un arbre mené (l'arbre d'entrée de la boîte de vitesses).

Le carter 12 forme également l'élément d'entrée de l'embrayage de verrouillage 10 et de l'amortisseur de torsion 4, tandis que le piston 2 forme l'élément de sortie de l'embrayage de verrouillage 10 en étant propre à être attelé au moyeu 13.

Le piston 2, globalement d'orientation transversale, est ainsi de manière précitée lié en rotation à la roue de turbine 14 (ici via le moyeu 13), tout en étant monté mobile axialement vis-à-vis de la roue de turbine 14.

Un dispositif d'étanchéité 16 intervient entre la face avant de la douille 25 et l'alésage interne de la couronne 15. Ce dispositif comporte une pièce annulaire à section en forme de L soudée, d'une part, sur le flasque transversal, que comporte la douille 25 à son extrémité axiale la plus éloignée de la roue 14 pour fixation par soudage du piston 2, et, d'autre part, sur une bague interposée entre la périphérie interne de la couronne 15 et la périphérie externe de la partie axiale tubulaire de la pièce annulaire précitée. Un joint d'étanchéité est prévu entre ladite bague et la couronne 15.

Par ailleurs le carter 12 porte centralement un nez 17 de forme tubulaire formant bague de centrage. Ce nez 17, d'orientation axiale, est dirigé vers la roue de turbine 14. Il est rapporté à fixation sur le carter 12 ici par soudage, par exemple par soudage du type laser, avec formation d'un cordon.

Plus précisément le nez 17 est rapporté centralement sur la paroi 28, globalement transversale, que présente frontalement le carter 12.

Le nez 17 entoure l'extrémité avant du moyeu 13 ainsi qu'une bague de poussée 18 interposée axialement entre l'extrémité libre du moyeu 13 et le carter. Cette bague 18, ici en matériau de frottement, présente, de manière connue en soi, des canaux transversaux (non visibles) pour établir une communication entre l'intérieur et l'extérieur du moyeu 13.

Pour mémoire on rappellera que l'arbre d'entrée de la boite de vitesses est creusé intérieurement en sorte que le fluide, ici de l'huile, peut circuler à travers la bague 18 pour manoeuvre du piston 2.

Cette bague 18 comporte un insert de retenu fixé sur le carter ici par soudage par point.

Suivant une caractéristique le piston 2 est interposé axialement entre la roue de turbine 14 et une masse 3 montée tourillonnante sur le nez 17.

La masse 3 porte à sa périphérie externe une saillie annulaire 31 d'orientation transversale offrant une surface de contact 32 au piston 2 en regard d'une contre-surface 22 d'orientation transversale du piston 2.

Ici, lorsque l'embrayage 10 est engagé, le piston 2 s'appuie indirectement par sa contre-surface 22 sur la surface 32, une garniture de frottement 40 étant interposée axialement entre la surface 32 et le piston 2. Cette garniture 40 est ici collée sur la surface 32, mais l'inverse est possible, la garniture 40 pouvant être collée sur le piston 2 doté à sa périphérie externe d'un rebord annulaire 21 d'orientation axiale pour sa rigidification.

C'est entre la périphérie interne du rebord annulaire 19 d'orientation axiale, que présente le carter 12 à sa périphérie externe, et la périphérie externe de la roue de turbine 14 qu'est implantée la surface 32. Pour ce faire, la saillie 31 est raccordée par une partie inclinée 33 à la partie principale de la masse 3 formant le contre-piston de l'embrayage 10.

De même une partie inclinée raccorde la contre-surface 22 du piston 2, ici en tôle emboutie, à la partie principale d'orientation transversale de celui-ci.

La surface 32 et la contre-surface 22 sont donc décalées axialement en direction de la périphérie externe de la roue de turbine 14, ici à la faveur des parties inclinées 23,33 permettant d'épouser au mieux la forme de la roue 14 et donc de réduire l'encombrement axial.

Ainsi la masse 3 présente une partie principale 30 et, suivant une caractéristique à la périphérie externe de sa partie principale 30, la saillie 31 dirigé radialement en direction du rebord 19 du carter 12 en étant décalée axialement par rapport à ladite partie principale 30 en direction de la périphérie externe de la roue de turbine 14. La partie principale 30 est donc monobloc.

Suivant une caractéristique la partie inclinée 33 offre une surface d'appui à une rondelle de phasage 5 à section globalement de forme trapézoïdale.

Plus précisément c'est la face 34 tournée à l'opposé du piston 2 et de la roue 14 de la partie inclinée 33, de forme tronconique, qui forme ladite surface d'appui. Cette face 34 se raccorde à la face annulaire d'orientation axiale 35, que présente la partie principale 30 de la masse 3 à sa périphérie externe.

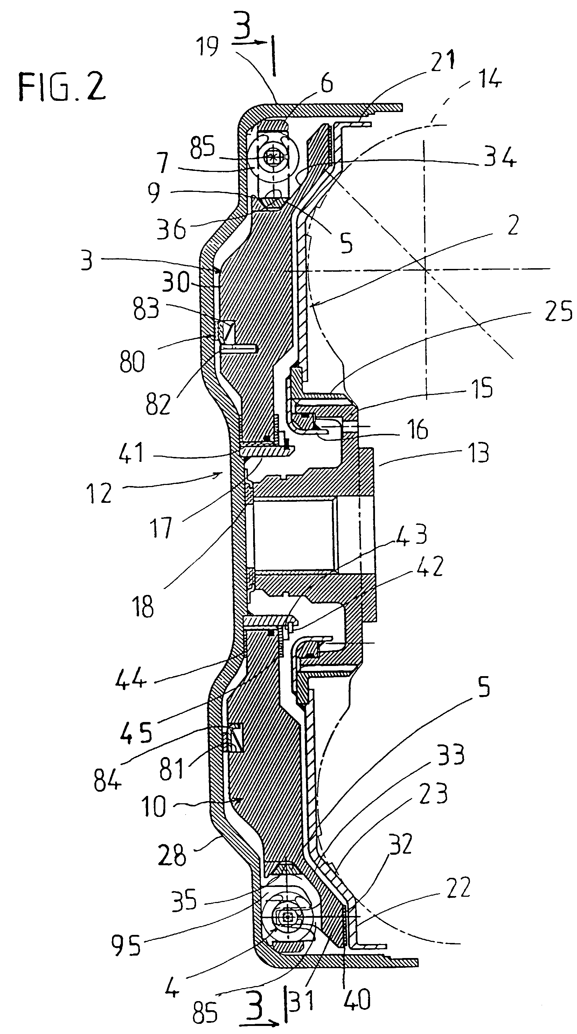

La masse 3 présente de place en place des saillies radiales 9. Ici trois saillies 9 sont prévues. Ces saillies 9 ont en section transversale (figure 2) une forme de coin et offrent une face d'appui inclinée 36 en regard de la face 34.

La face 36 est inclinée en sens inverse par rapport à la face 34.

Les saillies 36 s'étendent au niveau de l'extrémité libre de la face 35 en sorte qu'il est formé localement une gorge de forme trapézoïdale avec deux faces inclinées 36,34 et un fond 35.

L'écartement entre les faces inclinées 34,36 est déterminé par la largeur de la rondelle de phasage 5 afin que celle-ci puisse se loger dans la gorge fractionnée et venir en appui, à jeu de montage, sur les faces 36,34. Un jeu radial annulaire existe entre la face externe 35 de la masse 3 et la rondelle 5.

Ainsi la rondelle 5, dite par commodité rondelle interne de phasage, est calée axialement et radialement par les faces 36,34 et la masse 3 forme ainsi une poulie pour la rondelle 5.

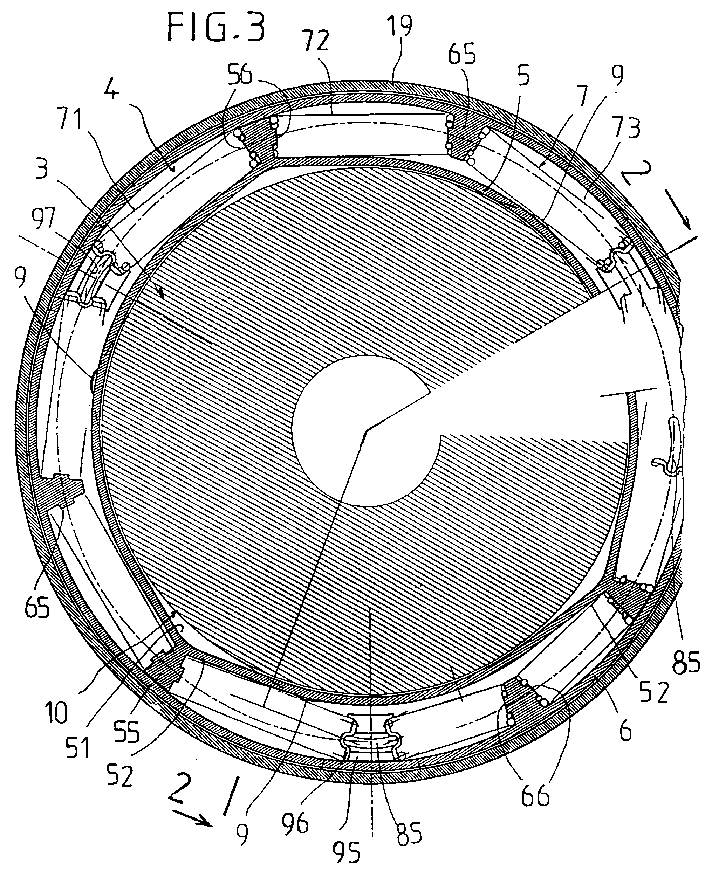

Pour pouvoir monter la rondelle 5 dans les gorges de la masse 3, suivant une caractéristique, ladite rondelle 5 présente localement des passages 51 dans lesquels sont propres à pénétrer les saillies 9. Circonférentiellement ces saillies 9 ont ici une forme globalement triangulaire (figure 3) et il en est de même des passages 51 formés donc à la faveur d'une déformation saillante 52 en direction opposée à l'axe de l'ensemble, ladite déformation 52 étant de forme triangulaire.

Ainsi le montage de la rondelle 5 dans les gorges est du type baïonnette avec dans un premier temps engagement axial des déformations 52 par dessus les saillies 9 puis rotation avec engagement de la rondelle 5 dans les gorges et calage axial de celle-ci.

La masse 3 est accouplée élastiquement au carter 12 ici par le dispositif amortisseur de torsion 4 intervenant à la périphérie externe de la masse 3. Plus précisément ce dispositif intervient selon une caractéristique de l'invention, d'une part, radialement entre la périphérie interne du rebord externe 19 du carter 12 et la face externe 35 de la partie principale 30 de la masse 3 et, d'autre part, axialement entre la partie transversale 28 du carter 12, ici en tôle emboutie, et la saillie 31 de la masse 3 ici en acier ou en variante en fonte.

Les moyens élastiques 7 du dispositif 4 sont donc montés radialement entre la face 35 et le rebord 19 et axialement entre la partie 28 et la saillie 31. L'implantation de ces moyens 7 favorise l'augmentation du débattement angulaire relatif entre la masse 3 et le carter 12.

Ce dispositif comporte une autre rondelle de phasage 6, dite rondelle de phasage externe, montée ici tourillonnante sur la périphérie externe de la première rondelle de phasage 5. Ainsi les rondelles de phasage 5,6 sont montées rotatives par rapport aux parties coaxiales 3,12.

Ici ces rondelles 5,6 sont métalliques en étant réalisées par découpage à la presse. Ces rondelles de phasage 5,6 sont montées dans le même plan tête-bêche de manière concentrique, la matière de la rondelle interne 5 étant prélevée économiquement dans la chute de matière de la rondelle externe 6 entourant la rondelle 5.

Ces rondelles 5,6 sont à l'image l'une de l'autre et présentent chacune des pattes radiales respectivement 55,65, avec chacune des doigts respectivement 56,66 s'étendant circonférentiellement de part et d'autre des pattes 55,65 pour centrage de moyens élastiques à action circonférentielle 7 décrits ci-après.

Les pattes 55 de la rondelle 5 sont dirigées radialement en direction opposée à l'axe de l'ensemble, tandis que les pattes 65 de la rondelle 6 sont dirigées vers l'axe de l'ensemble.

Ces pattes 55,65 ont une forme globalement trapézoïdale, l'extrémité libre des pattes 65 s'étendant à distance de la rondelle 5, tandis que le bord supérieur, de plus grande largeur circonférentielle, des pattes 55 sert suivant une caractéristique au centrage de la rondelle externe 6.

Cette rondelle 6 est ainsi, montée tourillonnante sur la périphérie externe des pattes 55.

Bien entendu la hauteur des pattes 65 est telle que celle-ci n'interfère pas avec les déformations 52 et le nombre de pattes 55,65 dépend des applications.

Ici trois pattes (bras radiaux) 55,65 sont prévues. Les pattes 55 sont réparties régulièrement à 120° les unes par rapport aux autres et s'étendent à partir du sommet des déformations 52.

Les pattes 65 sont également réparties régulièrement à 120° les unes par rapport aux autres.

Le carter 12 porte de place en place des pattes d'appui 95 d'orientation axiale, tandis que la masse 3 porte des doigts 85 d'orientation axiale, circonférentiellement de forme oblongue. Les doigts 85 sont dirigés axialement vers la paroi 28 du carter 12, tandis que des pattes 95 sont dirigées axialement vers la saillie 31.

Trois pattes 95 réparties régulièrement à 120° les unes par rapport aux autres et trois doigts 85 également répartis à 120° les uns par rapport aux autres sont prévus.

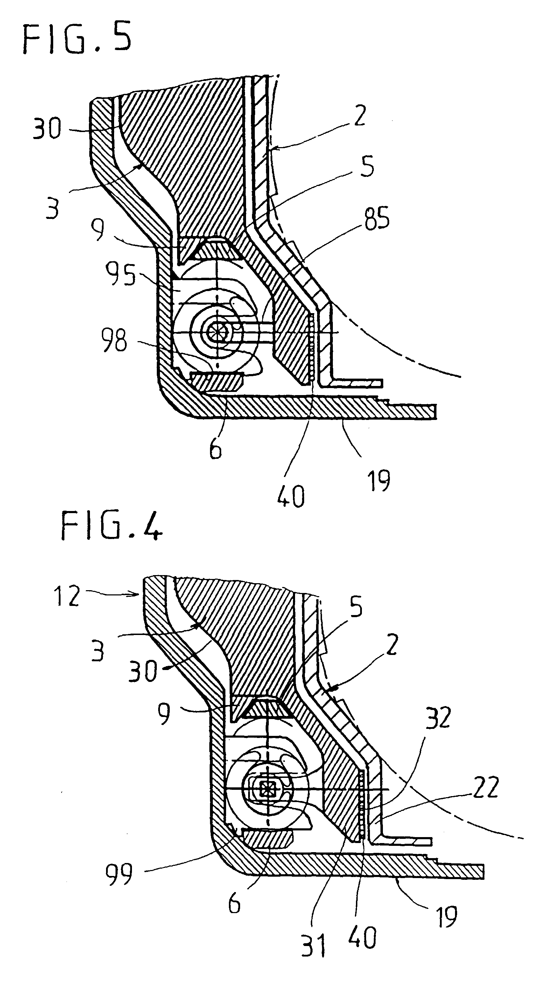

Les doigts 85 venus d'un seul tenant par moulage avec la masse 3 (avec la saillie 31 de celle-ci) s'étendent axialement et il en est de même des pattes 95 rapportées par soudage sur le carter 12 (sur la paroi transversale 28 de celui-ci). Ces pattes offrent transversalement une grande surface d'appui (figures 4 et 5).

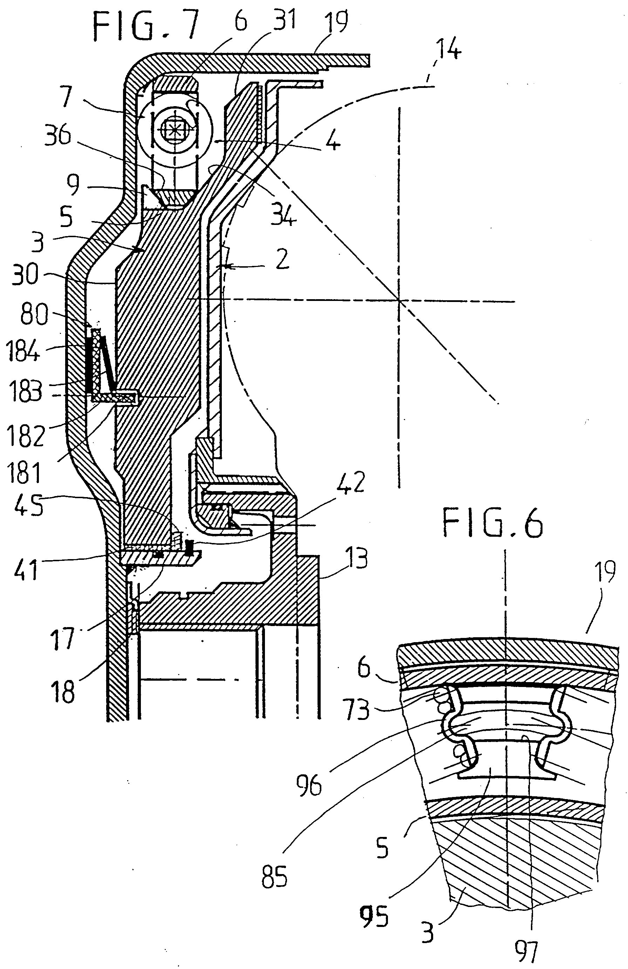

A l'état de repos du dispositif amortisseur de torsion les doigts 85 pénètrent dans une échancrure circonférentielle 97 (figures 4 et 6), que présentent centralement les pattes d'appui 95.

Comme visible à la figure 3 à l'état de repos de l'amortisseur de torsion entre deux pattes 95 consécutives on trouve successivement une patte 65 puis une patte 55, le décalage circonférentiel entre deux pattes consécutives 55,65,95 étant globalement de 40°.

Dans cette position, les saillies 9 sont dans une position médiane par rapport aux patte 55 (figure 3), en sorte que la rondelle 5 ne peut s'échapper car cet angle est supérieur est celui du débattement angulaire relatif entre la rondelle 5 et la masse 3.

Ainsi les pattes 65 de la rondelle externe 6 sont décalées circonférentiellement par rapport aux pattes 55 de la rondelle interne 5, et ici il est prévu trois jeux de deux organes élastiques concentriques 73,72,71 intervenant circonférentiellement entre deux pattes 95 consécutives en étant montées radialement entre les deux rondelles 5,6.

Ces organes élastiques appartiennent aux moyens élastiques 7 à action circonférentielle précités et consistent ici en des ressorts à boudin concentriques de même raideur.

Grâce à la formation des pattes 95 et des doigts 85, il est possible ainsi d'avoir trois groupes de trois jeux d'organes élastiques intervenant en parallèle, les trois jeux d'organes élastiques intervenant en série entre deux pattes d'appui consécutives 95. Les pattes 95 servent donc d'appui aux extrémités des ressorts 73 en offrant une bonne assise à ceux-ci, tandis que les doigts 85 servent à actionner (à comprimer) les ressorts 73 en agissant centralement sur ceux-ci.

Suivant une autre caractéristique, le dernier des organes élastiques 73 prend appui sur les pattes 95 par l'intermédiaire d'une coupelle d'appui 96 ici métallique (figure 6).

Cette coupelle 96 est bombée centralement, ici de manière semi-circulaire, pour coopération avec l'une des extrémités circonférentielles des doigts 85, ladite extrémité étant arrondie à cet effet pour pénétrer dans la partie bombée de la coupelle 96.

Dans la position de repos de l'amortisseur 4, les doigts 85 prennent appui sur les coupelles 96 (figure 6).

Bien entendu un jeu circonférentiel peut exister car pour la position de repos précitée les coupelles 96 sont en appui sur les bords latéraux des pattes 95 (figure 6).

Ainsi les doigts 85, de forme arquée (figure 6), sont montés de manière télescopique à l'intérieur des pattes 95 grâce à l'évidement de passages 97 de celles-ci.

Ainsi lors d'un mouvement relatif entre la masse 3 et le carter 12 les doigts 85 sont admis à agir sur les coupelles 96 concernées et à comprimer les organes élastiques 73, lesquels s'appuient sur les pattes 65 qui se déplacent alors entraînant une compression des organes 72 prenant appui sur les pattes 55 qui se déplacent pour comprimer les ressorts 71 prenant appui sur les pattes 95.

Grâce à cette disposition il est possible d'obtenir de grands débattements angulaires entre les doigts 85 et les pattes 95 et donc, entre le carter 12 et la masse 3. Ici tous les organes 71,72,73 ont la même raideur mais il n'en est pas nécessairement ainsi par exemple les organes 72 peuvent avoir une plus forte raideur que les organes 73, lesquels peuvent avoir une plus forte raideur que les organes 71, choisis par exemple pour filtrer les vibrations dans le domaine de ralenti du moteur du véhicule.

Il est possible d'obtenir ainsi un dispositif amortisseur de torsion à pentes multiples et à raideur variable.

Bien entendu cela dépend des applications et notamment du couple à transmettre.

On notera que la périphérie interne des pattes 95 est profilée pour retenir les coupelles 96 (figure 6). Ainsi le bord interne des pattes 95 est élargi.

On notera également (figure 5) que la rondelle externe 6 est calée axialement à la faveur d'une échancrure rectangulaire 98, que présentent les pattes soudées 95 à leur périphérie externe.

A la figure 4 la rondelle 6 est calée axialement dans un seul sens à la faveur d'un épaulement 99.

Dans certain cas, les moyens élastiques 7 effectuent à eux seuls un tel calage du fait que les pattes 65 viennent en prise par leurs doigts 66 avec les ressorts 72,73, eux-mêmes en prise avec les pattes 95 et 55.

Dans la figure 2 la masse 3 est montée tourillonnante sur le nez tubulaire 17 solidaire du carter 12 par l'intermédiaire d'un palier lisse 41 à faible coefficient de frottement.

On notera qu'un joint d'étanchéité est prévu entre la périphérie interne de la masse 3 et la périphérie externe du palier 41 fixé ici sur le nez 17.

Une rondelle de frottement 44 est interposée axialement entre la paroi 28 du carter 12 et la masse 3, tandis qu'une rondelle de frottement 45 intervient sur l'autre face de la masse 3.

Cette rondelle est maintenue par une rondelle d'application 43 calée axialement par un circlips 42 monté dans une gorge, que présente le nez 17 à son extrémité libre.

En variante la rondelle 43 est rapportée par vissage sur l'extrémité libre du nez 17. Dans tous les cas la masse 3 est calée axialement dans un sens par un épaulement solidaire axialement du nez 17, et le nez 17 est implanté radialement en dessous de la couronne 25 et du dispositif 16.

Suivant une autre caractéristique un dispositif d'hystérésis 80 variable intervient entre la paroi frontale 28 du carter 12 et la masse 3.

Ce dispositif comporte une rondelle élastique 83 à action axiale du type rondelle Belleville (en variante une rondelle ondulée) et une rondelle d'application 84 portant sur sa face dirigée vers la paroi 28 une garniture de frottement fixée ici par collage sur la rondelle 84.

Bien entendu la rondelle de frottement peut être collée contre la paroi 28.

Les rondelles 83,84 sont montées dans une creusure 81 que présente la masse 3 à cet effet.

Comme visible à la figure 2, la rondelle 83 prend appui entre le fond de la creusure 81 pour action sur la rondelle 84 et solliciter ladite rondelle 84 en direction de la face 28 afin de serrer la garniture de frottement de la rondelle 84 au contact de la paroi 28.

Ainsi la masse 3 est montée tourillonnante à sa périphérie interne sur le carter 12 à la faveur d'un palier annulaire 41,44,45 globalement en forme de U.

Le piston 2 délimite, de manière connue en soi, deux chambres. Au démarrage du véhicule, le piston 2 est à distance de la face 32 et de la masse 3. Une pression hydraulique est alors établie dans la chambre délimitée par le piston 2, la masse 3 et le moyeu 13.

L'alimentation de cette chambre est alors effectuée à partir des canaux transversaux de la bague 18.

L'embrayage de verrouillage 10 est alors désengagé et la roue d'impulseur peut alors entraîner la roue de turbine 14 et le moyeu 13 grâce à la circulation du fluide contenu dans le carter 12.

Pour éviter les phénomènes de glissement et les pertes d'énergie, une fois que la roue de turbine 14 est entraînée, on inverse les pressions hydrauliques dans les deux chambres de commande délimitées par le piston 2.

Le piston 2 est alors admis à se rapprocher de la garniture 40, puis à venir serrer ladite garniture 40.

Lors de cette phase, on vient décharger la rondelle élastique du dispositif d'hystérésis 80.

On notera qu'ici la rondelle d'application 84 est calée en rotation grâce à une goupille 82 implantée au niveau de la creusure 81.

Bien entendu un jeu circonférentiel peut être prévu, la rondelle 84 intervenant de manière différée.

A cet effet, la rondelle 84 porte à sa périphérie interne au moins une patte d'orientation axiale propre à venir en prise avec la goupille 82.

Bien entendu, en variante, (figure 7) la masse 3 peut présenter au moins une échancrure 181 en forme de mortaise pour pénétration, éventuellement à jeu circonférentiel, d'une patte 182, en forme de tenon que présente la rondelle d'application 184 à sa périphérie interne.

La rondelle Belleville 183 est alors interposée axialement entre la masse 3 et la rondelle d'application 184 en étant centrée par la patte 182.

On notera que dans cette figure les rondelles 44 et 43 ont été supprimées et que la masse 3 peut se déplacer axialement, l'épaulement 42 servant à limiter le déplacement axial.

Grâce à toutes ces dispositions, on obtient un embrayage de verrouillage présentant, au niveau du moyeu 13, une très faible inertie, principalement celle du piston lorsqu'il est en position désengagée et avec une forte inertie, due en grande partie à la masse 3 de grand poids, lorsqu'il est engagé (garniture 40 serrée entre la surface 32 et la contre-surface 22).

Cette forte inertie permet d'abaisser la fréquence de résonance que présente la chaîne cinématique allant du moteur du véhicule à la boîte de vitesses via l'appareil 11.

Cette fréquence de résonance est ainsi très basse. Ainsi lorsque le véhicule roule on se trouve largement au-dessus de cette fréquence de résonance, ce qui est favorable pour le confort de l'usager.

On notera que lorsque l'on engage le piston 2, dans une première phase, les frottements dus à l'hystérésis 80 sont forts puis diminuent au fur et à mesure que l'on serre la garniture 40, éventuellement fractionnée, la pression hydraulique agissant à l'encontre de la force développée par la rondelle élastique 83,183. Lors du désengagement de l'embrayage les frottements augmentent.

Ainsi au démarrage du véhicule lorsque l'on passe par la fréquence de résonance on bénéficie d'un fort frottement entre le carter 12 et la rondelle 84 (la masse 3 se déplaçant alors par rapport au carter 12) pour mieux amortir les vibrations puis ce frottement diminue.

On notera que l'amortisseur de torsion 4 permet également d'atténuer les vibrations, et que le mode de réalisation de la figure 7 est préférable car la masse 3 peut se déplacer axialement.

Bien entendu on peut enlever la rondelle 44 de la figure 2. Dans tous les cas le circlips 42 limite le déplacement axial de la masse 3 pour éviter notamment un léchage de la garniture 40 lorsque l'embrayage 10 est désengagé.

Grâce à cette possibilité de déplacement, en marche normale, (embrayage 10 engagé) on obtient un faible frottement entre la masse 3 et la paroi 28 car la rondelle 83,183 est délestée. Le dispositif d'hystérésis 80 est ainsi variable.

Ainsi qu'on l'aura compris la partie d'entrée de l'embrayage de verrouillage est en deux parties coaxiales, à savoir, la masse 3 et le carter 12, et l'amortisseur de torsion 4 comporte deux parties coaxiales 12,3 montées mobiles angulairement l'une par rapport à l'autre dans les limites d'un débattement angulaire déterminé.

Ce débattement se fait sur un grand angle grâce aux rondelles de phasage 5,6. Le palier 41 favorise un tel grand débattement, ainsi que l'implantation des moyens élastiques 7 sur une grande circonférence de manière précitée.

On obtient ainsi un très grand confort pour l'usager.

Bien entendu la présente invention n'est pas limitée à l'exemple de réalisation décrit. En particulier la masse 3 peut être montée tourillonnante sur le nez 17 à l'aide d'un roulement à billes à une ou plusieurs rangées de billes, de préférence étanche.

Les ressorts 71,72,73 peuvent ne comporter qu'un seul ressort.

En variante l'appareil d'accouplement hydrocinétique 11 peut comporter un coupleur dépourvu alors de roue de réacteur.

Dans tous les cas le carter 12 constitue ici l'élément menant de l'appareil hydrocinétique et également l'élément d'entrée du dispositif amortisseur de torsion, la masse 3 constituant la partie de sortie dudit amortisseur de torsion.

Le piston 2 constitue l'élément de sortie de l'embrayage de verrouillage calé en rotation avec mobilité axiale sur l'élément mené de l'appareil d'accouplement hydrocinétique.

En variante le piston 3 peut être monté tourillonnant sur le moyeu 13 en étant attelé directement à la roue de turbine 14 par des languettes tangentielles.

Le moyeu 13 est alors dépourvu de cannelure à sa périphérie externe.

On appréciera également que les temps de réponse pour embrayer et débrayer l'embrayage 10 sont très courts du fait de la faible inertie du piston 2 et que les pignons de la boîte de vitesses sont ménagés lorsque l'embrayage 10 est déverrouillé du fait de la faible inertie du piston 2.

Bien entendu la rondelle 6 peut être centrée par les pattes 95.

Dans tous les cas la rondelle de phasage interne 5 est montée tourillonnante de manière libre par rapport à la masse 3, tandis que la seconde rondelle de phasage 6 est montée tourillonnante de manière libre soit par rapport aux pattes 55 de la rondelle 5 et donc à la masse 3, ou aux pattes 95 appartenant à la seconde partie de l'amortisseur 4, la masse 3 appartenant à la première partie de l'amortisseur 4.

En variante des ressorts courbes précintrés de grande longueur peuvent être interposés entre deux pattes 95 consécutives, lesdits ressorts étant propres à être actionnés par les doigts 85 grâce aux coupelles 96.

Dans ce cas un ressort courbe remplace les ressorts 71,72,73.

Dans les figures précédentes, les coupelles 96 peuvent être prévues à chaque extrémité circonférentielle des ressorts 71,72,73.

En variante on peut inverser les structures. Ainsi la rondelle interne de phasage 5 peut présenter à sa périphérie interne des pattes dirigées radialement vers l'axe de l'ensemble et la masse 3 les passages.

Par exemple la masse 3 présente une gorge complémentaire creusée dans sa face 33. Cette gorge est interrompue localement (le flanc avant de celle-ci dirigée vers le carter 12) pour passage des pattes internes de la rondelle 5. Ces pattes ont alors avantageusement en section une forme complémentaire à celle de la gorge pour s'engager dans celle-ci.

Ainsi la rondelle 5 peut présenter par exemple trois pattes internes réparties régulièrement circonférentiellement et la masse 3 trois échancrures correspondantes. On engage alors axialement les pattes dans les échancrures puis on effectue une rotation et donc un montage du type baïonnette.

Ainsi la rondelle de centrage 5 comporte de place en place des saillies, tandis que la masse 3 présente localement des passages dans lesquels sont propres à pénétrer les saillies, en sorte que le montage de la rondelle interne sur la masse 3 est du type baïonnette. La gorge étant par exemple de forme trapézoïdale, comme dans les figures précédentes, la première partie coaxiale (la masse 3) présente donc à sa périphérie externe une première face d'appui en regard d'une autre face d'appui échancrée pour le passage des pattes de la rondelle interne, en sorte qu'il est formé une gorge, ici trapézoidale, pour le logement de la rondelle interne, calée axialement et radialement par ses pattes internes, de section trapézoïdale, complémentaires à celle de la gorge.

Bien entendu la gorge peut être de section rectangulaire tout comme les pattes complémentaires.

Enfin les parties de raccordement 33, 23 respectivement de la saillie 31 à la partie principale de la masse 3 et de la contre-surface 22 à la partie principale du piston 2 peuvent être de forme courbe pour épouser au mieux la forme de la roue de turbine 14.

## Revendications

1. Appareil d'accouplement hydrocinétique, notamment pour véhicules automobiles, du genre comportant un carter (12) propre à être calé en rotation sur un arbre menant, une roue de turbine (14) propre à être calée en rotation sur un arbre mené et un embrayage de verrouillage (10) intervenant entre le carter (12), présentant une paroi globalement transversale (28) portant centralement à fixation un nez tubulaire (17) et à sa périphérie externe un rebord annulaire (19) d'orientation axiale, et la roue de turbine (14), ledit embrayage comportant un piston (2) monté mobile axialement par rapport à la roue de turbine (14) en étant calé en rotation sur celle-ci et un contre-piston (3) associé au carter (12) et offrant une surface de contact (32) au piston (2), dans lequel le piston (2) est interposé axialement entre la roue de turbine (14) et une masse (3), formant le contre-piston, montée tourillonnante sur le carter (12), et accouplée élastiquement audit carter (12), et dans lequel la masse (3) est montée tourillonnante sur le nez tubulaire (17), solidaire du carter (12), et forme l'élément de sortie d'un dispositif amortisseur de torsion (4) comportant des moyens élastiques (7) à action circonférentielle et un élément d'entrée constitué par le carter (12), caractérisé en ce qu'un palier (41) est interposé radialement entre la périphérie interne de la masse (3) et la périphérie externe du nez (17), en ce que la masse (3) présente une partie principale (30) et à la périphérie externe de sa partie principale (30) une saillie annulaire (31) d'orientation transversale dirigée radialement en direction du rebord annulaire (19) du carter en étant décalée axialement par rapport à la partie principale (30) de la masse (3) en direction de la périphérie externe de la roue de turbine (14), en ce que ladite saillie (31) offre ladite surface de contact (32) au piston (2) et en ce que les moyens élastiques (7) à action circonférentielle du dispositif amortisseur de torsion sont montés à la périphérie externe de la partie principale (30) de la masse (3) entre la saillie transversale (31) de ladite masse (3) et la partie transversale (28) du carter (12).

2. Appareil selon la revendication 1, caractérisé en ce que la masse (3) est calée axialement par un épaulement (42) solidaire axialement du nez (17) du carter (12).

3. Appareil selon la revendication 1, caractérisé en ce que la masse (3) est calée axialement par un circlips (42) monté dans une gorge que présente le nez (17) à son extrémité libre.

4. Appareil selon la revendication 1, dans laquelle un dispositif d'hystérésis variable (80) à rondelle élastique (83) à action axiale est interposé axialement entre la masse (3) et la paroi frontale (28) du carter (12), caractérisé en ce que la masse (3) est monté sur son palier associé (41) avec un jeu axial par rapport à l'épaulement (42) du nez (17).

5. Appareil selon la revendication 1, caractérisé en ce que ladite saillie annulaire (31) se raccorde à la partie principale de la masse (3) par une partie inclinée (33).

6. Appareil selon la revendication 1, dans lequel les moyens élastiques (7) comportent des ressorts (7), caractérisé en ce que la saillie (31) de la masse (3) porte une pluralité de doigts (85), d'orientation axiale, dirigés vers la paroi transversal (28) du carter (12) pour action sur les ressorts (7), tandis que la paroi transversal du carter (12) porte des pattes d'appui (95) dirigées axialement vers la saillie (31) de la masse (3) pour appui des ressorts (7).

7. Appareil selon la revendication 6, caractérisé en ce que les doigts (85) pénètrent chacun dans une échancrure circonférentielle (97) des pattes d'appui (95).

8. Appareil selon la revendication 7, caractérisé en ce que les doigts (85) ont une forme oblongue.

9. Appareil selon la revendication 8, caractérisé en ce que les doigts (85) prennent appui sur des coupelles (96) bombées centralement à cet effet et en ce que les pattes d'appui (95) sont profilées pour retenir les coupelles (96).

10. Appareil selon la revendication 9, caractérisé en ce que l'amortisseur de torsion (4) comporte deux rondelles de phasage (5,6) à bras radiaux (55,65) montées dans un même plan tête-bêche de manière concentrique.

## Patentansprüche

1. Hydrodynamischer Momentwandler, insbesondere für Kraftfahrzeuge, umfassend ein Gehäuse (12), das drehfest mit einer treibenden Welle verbunden werden kann, ein Turbinenrad (14), das drehfest mit einer getriebenen Welle verbunden werden kann, und eine Überbruckungskupplung (10), die zwischen dem Gehäuse (12), das eine insgesamt quer angeordnete Wand (28) aufweist, die mittig eine daran befestigte rohrförmige Nase (17) und an ihrem äußeren Umfang eine axial ausgerichtete ringförmige Randleiste (19) trägt, und dem Turbinenrad (14) wirksam ist, wobei die besagte Kupplung einen Kolben (2), der im Verhältnis zum Turbinenrad (14) axial beweglich gelagert und drehfest mit diesem verbunden ist, und einen Gegenkolben (3) umfaßt, der mit dem Gehäuse (12) verbunden ist und eine Kontaktfläche (32) für den Kolben (2) aufweist, wobei der Kolben (2) axial zwischen dem Turbinenrad (14) und einer als Gegenkolben ausgebildeten Masse (3) eingefügt ist, die drehbar am Gehause (12) gelagert und elastisch mit dem besagten Gehäuse (12) verbunden ist, und wobei die Masse (3) drehbar auf der fest mit dem Gehäuse (12) verbundenen rohrförmigen Nase (17) gelagert ist und das Ausgangselement eines Torsionsdämpfers (4) bildet, der umfangsmäßig wirksame elastische Mittel (7) und ein Eingangselement umfaßt, das durch das Gehäuse (12) gebildet wird, **dadurch gekennzeichnet**, daß ein Lager (41) radial zwischen dem inneren Umfang der Masse (3) und dem äußeren Umfang der Nase (17) eingefügt ist, daß die Masse (3) einen Hauptteil (30) und am äußeren Umfang ihres Hauptteils (30) einen quer ausgerichteten ringförmigen Vorsprung (31) aufweist, der radial in Richtung der ringförmigen Randleiste (19) des Gehäuses verläuft und im Verhältnis zum Hauptteil (30) der Masse (3) axial in Richtung des äußeren Umfangs des Turbinenrads (14) versetzt ist, daß der besagte Vorsprung (31) die besagte Kontaktfläche (32) für den Kolben (2) aufweist und daß die umfangsmäßig wirksamen elastischen Mittel (7) des Torsionsdämpfers am äußeren Umfang des Hauptteils (30) der Masse (3) zwischen dem Quervorsprung (31) der besagten Masse (3) und dem Querteil (28) des Gehäuses (12) angebracht sind.

2. Momentwandler nach Anspruch 1, **dadurch gekennzeichnet**, daß die Masse (3) axial durch eine Schulter (42) gesichert ist, die axial fest mit der Nase (17) des Gehäuses (12) verbunden ist.

3. Momentwandler nach Anspruch 1, **dadurch gekennzeichnet**, daß die Masse (3) axial durch einen Sicherungsbügel (42) gesichert ist, der in eine Auskehlung eingesetzt ist, die die Nase (17) an ihrem freien Ende aufweist.

4. Momentwandler nach Anspruch 1, bei dem eine veränderliche Hysteresevorrichtung (80) mit einer axial wirksamen Federscheibe (83) axial zwischen der Masse (3) und der Stirnwand (28) des Gehäuses (12) eingefügt ist, **dadurch gekennzeichnet,** daß die Masse (3) auf ihrem zugehörigen Lager (41) mit einem axialen Spiel im Verhältnis zur Schulter (42) der Nase (17) angebracht ist.

5. Momentwandler nach Anspruch 1, **dadurch gekennzeichnet**, daß sich der ringförmige Vorsprung (31) über einen geneigten Teil (33) an den Hauptteil der Masse (3) anschließt.

6. Momentwandler nach Anspruch 1, bei dem die elastischen Mittel (7) Federn (7) umfassen, **dadurch gekennzeichnet,** daß der Vorsprung (31) der Masse (3) eine Mehrzahl von axial ausgerichteten Fingern (85) trägt, die zur Querwand (28) des Gehäuses (12) gerichtet sind, um auf die Federn (7) einzuwirken, während die Querwand des Gehäuses (12) Auflageansätze (95) trägt, die axial zum Vorsprung (31) der Masse (3) gerichtet sind, um die Auflage der Federn (7) herbeizuführen.

7. Momentwandler nach Anspruch 6, **dadurch gekennzeichnet**, daß die Finger (85) jeweils in eine umfangsmäßige Aussparung (97) der Auflageansätze (95) eingreifen.

8. Momentwandler nach Anspruch 7, **dadurch gekennzeichnet**, daß die Finger (85) eine längliche Form aufweisen.

9. Momentwandler nach Anspruch 8, **dadurch gekennzeichnet**, daß die Finger (85) auf Tellern (96) zur Auflage kommen, die dazu mittig gewölbt sind, und daß die Auflageansätze (95) profiliert sind, um die Teller (96) zu halten.

10. Momentwandler nach Anspruch 9, **dadurch gekennzeichnet**, daß der Torsionsdämpfer (4) zwei Phasenscheiben (5, 6) mit radialen Armen (55, 65) umfaßt, die in einer gleichen Ebene konzentrisch entgegengesetzt angebracht sind.

## Claims

1. A hydrokinetic coupling apparatus, especially for motor vehicles, of the kind comprising a casing (12) adapted to be mounted on a driving shaft for rotation therewith, a turbine wheel (14) adapted to be mounted on a driven shaft for rotation therewith, and a lock-up clutch (10) interposed between the casing (12) and the turbine wheel (14), the casing having a generally transverse wall (28) which carries, fixed centrally thereon, a tubular nose (17), and at its outer periphery an axially oriented annular flange (19), the said clutch comprising a piston (2) which is mounted for axial movement with respect to the turbine wheel (14) and which is mounted on the latter for rotation with it, together with a counter-piston (3) associated with the casing (12) and offering a contact surface (32) to the piston (2), wherein the piston (2) is interposed axially between the turbine wheel (14) and a mass (3) constituting the counter-piston, which is mounted for rotation on the casing (12) and coupled elastically to the said casing (12), and wherein the mass (3) is mounted for rotation on the tubular nose (17) fixed to the casing (12), and constitutes the output element of a torsion damping device (4), which includes circumferentially acting resilient means (7) and an input element constituted by the casing (12), characterised in that a bearing (41) is interposed radially between the inner periphery of the mass (3) and the outer periphery of the nose (17), in that the mass (3) has a main portion (30) and, at the outer periphery of its main portion (30), a transversely oriented annular projecting element (31) which extends radially towards the annular flange (19) of the casing and which is offset axially with respect to the main portion (30) of the mass (3) towards the outer periphery of the turbine wheel (14), in that the said projecting element (31) offers the said contact surface (32) to the piston (2), and in that the circumferentially acting resilient means (7) of the torsion damping device are mounted at the outer periphery of the main portion (30) of the mass (3), between the transverse projecting element (31) of the said mass (3) and the transverse portion (28) of the casing (12).

2. Apparatus according to Claim 1, characterised in that the mass (3) is located axially by a shoulder (42) which is fixed axially to the nose (17) of the casing (12).

3. Apparatus according to Claim 1, characterised in that the mass (3) is located axially by means of a circlip (42) fitted in a groove formed in the nose (17) at its free end.

4. Apparatus according to Claim 1, in which a variable hysteresis device (80) having an axially acting resilient ring (83) is interposed axially between the mass (3) and the front wall (28) of the casing (12), characterised in that the mass (3) is mounted on its associated bearing (41), with an axial clearance with respect to the shoulder (42) of the nose (17).

5. Apparatus according to Claim 1, characterised in that the said annular projecting element (31) is joined to the main portion of the mass (3) through an inclined portion (33).

6. Apparatus according to Claim 1, in which the resilient means (7) comprise springs (7), characterised in that the projecting element (31) of the mass (3) carries a plurality of axially oriented fingers (85) which are directed towards the transverse wall (28) of the casing (12) for acting on the springs (7), while the transverse wall of the casing (12) carries engagement lugs (95) which extend axially towards the projecting element (31) of the mass (3) for engagement with the springs (7).

7. Apparatus according to Claim 6, characterised in that each of the fingers (85) penetrates into a circumferential slot (97) in the engagement lugs (95).

8. Apparatus according to Claim 7, characterised in that the fingers (85) are of oblong form.

9. Apparatus according to Claim 8, characterised in that the fingers (85) bear on cup elements (96), which are bowed in the centre for this purpose, and in that the engagement lugs (95) are profiled for retaining the cup elements (96).

10. Apparatus according to Claim 9, characterised in that the torsion damper (4) includes two phasing rings (5, 6) having radial arms (55, 65) mounted in a common plane, concentrically in head-to-toe relationship.
